# FASCICULE DE BREVET EUROPEEN

(11) **EP 3 008 018 B1**
(45) Date de publication et mention de la délivrance du brevet: **20.02.2019**
(21) Numéro de dépôt: 14731736.6
(22) Date de dépôt: 27.05.2014
(51) Int. Cl.: C02F 3/04, C02F 3/10, C02F 3/28, B01D 39/04

(54) **FILTRE COMPACT DESTINÉ À UNE FILIÈRE D'ASSAINISSEMENT NON COLLECTIF DES EAUX USÉES**
KOMPAKTFILTER FÜR EIN NICHT-KOLLEKTIVES ABWASSERDESINFIZIERUNGSSYSTEM
COMPACT FILTER FOR A NON-COLLECTIVE WASTEWATER SANITIZING SYSTEM

(30) Priorité: 13.06.2013 FR 1355484
(43) Date de publication de la demande: 20.04.2016
(73) Titulaire: F2F, 50480 Sainte Mère Eglise (FR)
(72) Inventeur: SIG, Adrien, F-50270 Barneville-Carteret (FR)
(74) Mandataire: Cabinet HERRBURGER
(86) Numéro de dépôt international: PCT/FR2014/051243
(87) Numéro de publication internationale: WO 2014/199038

(56) Documents cités:
- EP-A1- 2 322 487
- DE-U1- 9 216 668
- US-A1- 2006 081 533
- US-A1- 2010 319 913

## Description

La présente invention a pour objet un filtre compact destiné à une filière d'assainissement non collectif des eaux usées.

Pour des raisons de sécurité évidentes, les eaux usées domestiques ou « toutes eaux » qui regroupent les eaux dites vannes ou « eaux noires » (toilettes, urinoirs ...) et les eaux ménagères ou « eaux grises » (bains, douches, eaux sales de cuisine, diverses eaux de lavage...) et sont de nature biodégradable ne peuvent pas être directement rejetées dans le milieu hydraulique superficiel mais doivent préalablement subir des traitements d'épuration ayant pour fonction de supprimer ou tout au moins de diminuer leur caractère polluant, de façon à leur permettre de satisfaire à des normes qui ont été établies par la législation.

Les eaux usées sont ainsi classiquement soumises à un traitement préalable correspondant en règle générale à un prétraitement anaérobie dans une fosse septique ou fosse toutes eaux qui assure le piégeage des matières en suspension (MES) et des flottants suivi d'un traitement aérobie par infiltration des eaux prétraitées sur un lit bactérien.

Différents fabricants proposent actuellement sur le marché des filières d'assainissement non collectif des eaux usées constituées par l'association d'une fosse septique ou fosse toutes eaux et d'un filtre compact monté en aval de cette fosse.

Un tel filtre compact est constitué par une enceinte étanche destinée à être enterrée qui est réalisée en un matériau inerte vis-à-vis de la corrosion tel que par exemple le polyéthylène et comporte une tubulure d'entrée des effluents provenant de la fosse septique ou fosse toutes eaux et une tubulure de sortie des effluents traités.

Cette enceinte renferme à sa partie interne un massif filtrant constitué par un support de biomasse aérobie en un matériau de surface développée importante ainsi que des moyens de répartition uniforme des effluents provenant de la tubulure d'entrée sur la surface supérieure du massif filtrant et un canal de drainage situé au-dessous du massif filtrant ; ce canal de drainage renferme des moyens de drainage permettant l'évacuation par la tubulure de sortie des effluents traités après percolation par gravité au travers du massif filtrant.

Les filières d'assainissement du type susmentionné doivent, par ailleurs, obligatoirement être équipées de conduites de ventilation basses permettant l'introduction d'air frais à la partie interne de l'enceinte du filtre compact renfermant le massif filtrant et de conduites de ventilation secondaire hautes permettant l'extraction de l'air vicié et des gaz rejetés par ce massif.

Il est à noter que, en fonction des dimensions et du nombre d'occupants de l'habitation devant être traitée le filtre compact peut être constitué par un seul ou par plusieurs modules de filtration identiques montés en parallèles.

Il est actuellement proposé sur le marché des filtres compacts renfermant différents types de massifs filtrants, ce dans le cadre de filières d'assainissement normatives ou de filières d'assainissement dérogatoires. Par exemple, le document EP 2 322 487 divulgue un filtre compact équipée à sa partie interne d'un massif filtrat constitué par des fragments de mésocarpe de noix de coco compactés.

Ces massifs filtrants se distinguent toutefois par un coût relativement élevé ou par des performances d'épuration pouvant s'avérer insuffisantes.

La présente invention a pour objet de proposer un filtre compact destiné à une filière d'assainissement non collectif des eaux usées dont le massif filtrant renferme un matériau jamais utilisé à ce jour dans ce but, disponible en grande quantité, donc peu onéreux et présentant parallèlement des performances de filtration totalement satisfaisantes.

Selon l'invention, un tel filtre est caractérisé en ce que son massif filtrant renferme au moins une couche de coquilles de noisettes concassées ayant une dimension comprise entre 2 et 10 mm.

L'utilisation de coquilles de noisettes concassées en tant que support de biomasse dans un filtre compact est d'autant plus avantageuse qu'il s'agit là d'un matériau qui était jusqu'à ce jour mis au rebut, et, donc dont l'invention permet la revalorisation.

Comme il a déjà été indiqué, le filtre compact peut, sans pour cela sortir du cadre de l'invention être en réalité constitué par plusieurs modules de filtration identiques montés en parallèle, chacun de ces modules ayant en règle générale une surface de 4,1 m² et un dimensionnement correspondant à une capacité de traitement de 6 équivalents habitants.

Conformément à l'invention, le filtre compact peut avantageusement être associé à un auget monté en amont de celui-ci sur la tubulure d'entrée et permettant d'alimenter le massif filtrant par bâchées de façon à garantir une meilleure répartition des effluents à traiter sur l'ensemble de sa surface.

Un tel auget est de préférence couplé à des rampes de répartition intégrées à l'enceinte du filtre compact et montées au-dessus du massif filtrant de façon à constituer les moyens de répartition des effluents.

Les effluents ainsi répartis s'écoulent ensuite au travers du massif filtrant de manière gravitaire.

Au cours de leur traversée du massif filtrant, les matières en suspension non retenues au niveau de la fosse septique ou fosse toutes eaux sont éliminées par l'effet de filtration et la pollution organique est quant à elle dégradée par les bactéries aérobies fixées sur les coquilles de noisettes concassées.

Selon une autre caractéristique de l'invention, le massif filtrant renferme au moins deux couches de coquilles de noisettes concassées respectivement séparées par une nappe d'un complexe tridimensionnel obtenue par extrusion à partir d'un mono-filament et noyée dans ce massif filtrant.

Une telle nappe d'un complexe tridimensionnel a pour fonction de garantir une meilleure répartition des effluents à traiter sur toute la surface du massif filtrant.

L'épaisseur de cette nappe, qui peut avantageusement être obtenue à partir d'un mono filament de polypropylène est quant à elle de préférence comprise entre 0,5 et 1,0 cm.

Des tests réalisés en laboratoire ont permis d'établir que le nombre optimum de couches de coquilles de noisettes concassées renfermées dans le massif filtrant du filtre compact conforme à l'invention est égal à trois, c'est-à-dire une couche supérieure, une couche intermédiaire et une couche inférieure.

Selon une autre caractéristique préférentielle de l'invention, la couche intermédiaire et la couche inférieure de coquilles de noisettes concassées sont séparées par une couche de ré-aération renfermant un bio-média en matière plastique ayant pour fonction de permettre d'enrichir les effluents à traiter en oxygène afin de favoriser le développement des bactéries aérobies responsables du traitement.

Un tel bio-média est avantageusement constitué par des éléments, par exemple des éléments annulaire ayant une grande surface spécifique notamment conditionnés en vrac dans des filets en matière plastique à larges mailles uniformément répartis sur la surface de la couche inférieure de coquilles de noisettes concassées.

Les dimensions de ces éléments sont, par exemple, avantageusement de 10 à 45 mm.

Selon une autre caractéristique de l'invention, une nappe du complexe tridimensionnel est de préférence interposée entre la couche intermédiaire de coquilles de noisettes concassées et la couche de ré-aération.

Selon une caractéristique préférentielle de l'invention, l'épaisseur des différentes couches constitutives du massif filtrant équipant le filtre compact conforme à l'invention est la suivante :
- couche supérieure : 8 à 12 cm,
- couche intermédiaire : 16 à 24 cm,
- couche de ré-aération : 12 à 15 cm, et
- couche inférieure : 25 à 35 cm.

Selon une autre caractéristique de l'invention, un géotextile bidimensionnel est interposé entre la couche inférieure et le canal de drainage pour empêcher le colmatage des moyens de drainage par les matières en suspension.

Un tel géotextile bidimensionnel peut avantageusement être réalisé en un matériau similaire à celui utilisé pour la réalisation du complexe tridimensionnel.

Les effluents traités qui pénètrent dans la chambre d'aération après avoir traversé le géotextile sont récupérés par les moyens de drainage renfermés dans cette chambre et transitent alors par une boite de prélèvement/répartition ou le cas échéant par un poste de relevage avant leur rejet final vers le milieu hydraulique superficiel ou par infiltration dans le sol naturel.

Lorsque le filtre compact comporte un poste de relevage, celui-ci est classiquement équipé d'une armoire de commande (de préférence équipée d'un compteur horaire).

Les caractéristiques du filtre compact qui fait l'objet de l'invention seront décrites plus en détail en se référant aux dessins non limitatifs annexés dans lesquels :
- la figure 1 est une coupe schématique transversale d'un tel filtre,
- la figure 2 est une vue en perspective d'un exemple d'élément constitutif du bio-média.

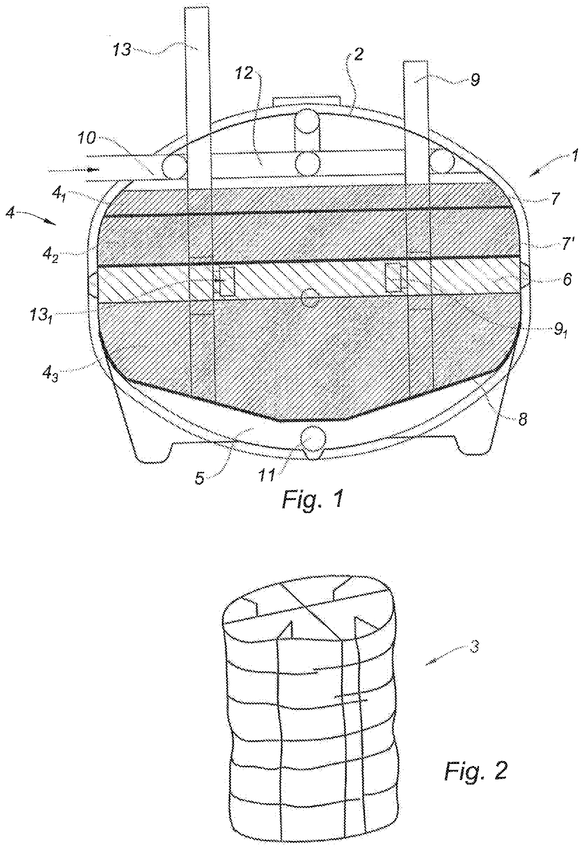

Selon la figure 1, le filtre compact est constitué par une enceinte étanche en polyéthylène 1 fermée par un couvercle 2 qui est destinée à être enterrée.

L'enceinte étanche 1 renferme à sa partie interne un massif filtrant 4 comportant trois couches de coquilles de noisettes concassées constituant un support de biomasse aérobie à savoir une couche supérieure 4₁ ayant une épaisseur comprise entre 8 et 12 cm, une couche intermédiaire 4₂ ayant une épaisseur de 16 à 24 cm et une couche inférieure 4₃ ayant une épaisseur comprise entre 25 et 35 cm.

L'enceinte 1 comporte une tubulure d'entrée 10 des effluents à traiter provenant d'une fosse septique ou fosse toutes eaux à sa partie supérieure comme schématisé par la flèche ainsi qu'une tubulure de sortie des effluents traités 11 à sa partie inférieure.

La tubulure d'entrée 10 des effluents à traiter est reliée à une rampe 12 montée au-dessus du massif filtrant 4 de façon à permettre une répartition uniforme de ces effluents.

L'enceinte étanche 1 est par ailleurs équipée à sa partie inférieure d'un canal de drainage 5 situé au-dessous du massif filtrant 4 et renfermant des moyens de drainage non représentés qui permettent l'évacuation par la tubulure de sortie 11 des effluents traités après percolation par gravité au travers de ce massif filtrant 4.

Selon la figure 1, la couche intermédiaire de coquilles de noisettes concassées 4₂ et la couche inférieure de coquilles de noisettes concassées 4₃ sont séparées par une couche de ré-aération 6 renfermant un bio-média en matière plastique 3 constitué par des éléments ayant une grande surface spécifique conditionnés en vrac dans des filets en matière plastique à larges mailles non représentés qui sont uniformément répartis sur la surface de la couche inférieure 4₃.

L'épaisseur de cette couche de ré-aération est comprise entre 12 et 15 cm.

Un exemple d'élément annulaire pouvant être constitutif du bio-média 3 est représenté sur la figure 2.

Selon la figure 1, la couche supérieure 4₁ et la couche intermédiaire 4₂ de coquilles de noisettes concassées d'une part et la couche intermédiaire de coquilles de noisettes concassées 4₂ et la couche de ré-aération 6 d'autre part sont séparées par une nappe d'un complexe tridimensionnel 7, 7' appliquée sur la totalité de la surface du massif filtrant et noyée dans les coquilles de noisettes concassées.

Ce complexe tridimensionnel dont l'épaisseur est située dans la plage de 0,5 à 1,0 cm est obtenu par extrusion à partir d'un mono-filament de polypropylène.

Un géotextile bidimensionnel 8 réalisé en un même matériau que le complexe tridimensionnel constitutif des nappes 7, 7' est interposé entre la couche inférieure de coquilles de noisettes concassées 4₃ et le canal de drainage 5 pour empêcher le colmatage des moyens de drainage par les matières en suspension.

Selon la figure 1, l'enceinte est par ailleurs reliée à une conduite de ventilation basse 9 d'alimentation en air frais pénétrant dans le massif filtrant 4 et dont une branche 9₁ débouche dans la couche de ré-aération 6.

L'enceinte 1 est également reliée à une conduite de ventilation secondaire haute 13 permettant l'évacuation de l'air vicié et des gaz qui pénètre elle-aussi dans le massif filtrant 4 et comporte une branche 13₁ débouchant dans la couche de ré-aération 6.

### NOMENCLATURE

- 1.: Enceinte étanche
- 2.: Couvercle
- 3.: Bio-média
- 4.: Massif filtrant
4₁. Couche supérieure
4₂. Couche intermédiaire
4₃. Couche inférieure
- 5.: Canal de drainage
- 6.: Couche de ré-aération
- 7.7'.: Nappe d'un complexe tridimensionnel
- 8.: Géotextile bidimensionnel
- 9.: Conduite de ventilation basse
9₁. Branche
- 10.: Tubulure d'entrée
- 11.: Tubulure de sortie
- 12.: Rampe de répartition
- 13.: Conduite de ventilation haute
13₁. Branche

## Revendications

1. Filtre compact destiné à une filière d'assainissement non collectif des eaux usées constitué par une enceinte étanche (1) destinée à être enterrée et comportant une tubulure d'entrée (10) et une tubulure de sortie des effluents (11), cette enceinte (1) étant équipée à sa partie interne d'un massif filtrant (4) constitué par un support de biomasse aérobie en un matériau de surface développée importante, ainsi que de moyens de répartition uniforme des effluents provenant de la tubulure d'entrée sur la surface supérieure du massif filtrant (4) et d'un canal de drainage (5) situé au-dessous du massif filtrant (4) et renfermant des moyens de drainage permettant l'évacuation par la tubulure de sortie des effluents (11) traités après percolation par gravité au travers du massif filtrant (4),
**caractérisé en ce que**
le massif filtrant (4) renferme au moins une couche de coquilles de noisettes concassées ayant une dimension comprise entre 2 et 10 mm.

2. Filtre compact conforme à la revendication 1,
**caractérisé en ce que**
le massif filtrant (4) renferme au moins deux couches de coquilles de noisettes concassées respectivement séparées par une nappe d'un complexe tridimensionnel (7, 7') obtenu par extrusion à partir d'un mono-filament noyée dans ce massif filtrant (4).

3. Filtre compact conforme à l'une quelconque des revendications 1 et 2,
**caractérisé en ce que**
le massif filtrant (4) renferme trois couches de coquilles de noisettes concassées, à savoir une couche supérieure (4₁), une couche intermédiaire (4₂) et une couche inférieure (4₃).

4. Filtre compact conforme à la revendication 3,
**caractérisé en ce que**
la couche intermédiaire (4₂) et la couche inférieure (4₃) sont séparées par une couche de ré-aération (6) renfermant un bio-média en matière plastique.

5. Filtre compact conforme à la revendication 2,
**caractérisé en ce que**
le complexe tridimensionnel est obtenu à partir d'un mono-filament de polypropylène.

6. Filtre compact conforme à l'une quelconque des revendications 2 et 5,
**caractérisé en ce que**
la nappe du complexe tridimensionnel (7, 7') a une épaisseur comprise entre 0,5 et 1,0 cm.

7. Filtre compact conforme à l'une quelconque des revendications 1 à 6,
**caractérisé en ce qu'**
un géotextile bidimensionnel (8) est interposé entre la couche inférieure (4₃) et le canal de drainage (5) pour empêcher le colmatage des moyens de drainage par les matières en suspension.

8. Filtre compact conforme à la revendication 4,
**caractérisé en ce que**
le bio-média en matière plastique (3) est constitué par des éléments ayant une grande surface spécifique notamment conditionnés en vrac dans des filets uniformément répartis sur la surface de la couche inférieure (4₃).

9. Filtre compact conforme à l'une quelconque des revendications 4 et 8,
**caractérisé en ce qu'**
une nappe du complexe tridimensionnel (7, 7') est interposée entre la couche intermédiaire (4₂) et la couche de ré-aération (6).

10. Filtre compact conforme à l'une quelconque des revendications 4 à 9,
**caractérisé en ce que**
l'épaisseur des différentes couches est la suivante :
- couche supérieure : 8 à 12 cm,
- couche intermédiaire : 16 à 24 cm,
- couche de ré-aération : 12 à 15 cm, et
- couche inférieure : 25 à 35 cm.

## Patentansprüche

1. Kompaktfilter für ein nicht-kollektives Abwasserdesinfizierungssystem, der durch ein dichtes Gehäuse (1) gebildet ist, das dazu bestimmt ist, vergraben zu werden, und einen Eingangsstutzen (10) sowie einen Ausgangsstutzen für die Abwässer (11) aufweist, wobei das Gehäuse (1) an seinem Innenteil mit einer Filtermasse (4), die durch einen Träger von aerober Biomasse aus einem Material mit einer großen, abgewickelten Fläche gebildet ist, sowie mit Mitteln zur gleichmäßigen Verteilung der aus dem Eingangsstutzen herkommenden Abwässer auf der oberen Fläche der Filtermasse (4) und mit einem Entwässerungskanal (5), der unter der Filtermasse (4) angeordnet ist und Entwässerungsmittel umfasst, welche die Ableitung durch den Ausgangsstutzen der Abwässer (11) ermöglichen, die nach der Durchsickerung durch Schwerkraft durch die Filtermasse (4) behandelt werden, versehen ist,
**dadurch gekennzeichnet, dass**
die Filtermasse (4) mindestens eine Schicht von zerkleinerten Haselnussschalen umfasst, die eine Größe zwischen 2 und 10 mm aufweist.

2. Kompaktfilter gemäß Anspruch 1,
**dadurch gekennzeichnet, dass**
die Filtermasse (4) mindestens zwei Schichten von zerkleinerten Haselnussschalen umfasst, die jeweils durch einen Film eines dreidimensionalen Komplexes (7, 7') getrennt sind, das durch Extrusion aus einem Monofilament hergestellt wird, das in die Filtermasse (4) verlegt ist.

3. Kompaktlilter gemäß einem der Ansprüche 1 oder 2,
**dadurch gekennzeichnet, dass**
die Filtermasse (4) drei Schichten von zerkleinerten Haselnussschalen umfasst, nämlich eine obere Schicht (4₁), eine mittlere Schicht (4₂) und eine untere Schicht (4₃).

4. Kompaktfilter gemäß Anspruch 3,
**dadurch gekennzeichnet, dass**
die mittlere Schicht (4₂) und die untere Schicht (43) durch eine Wiederbelüftungsschicht (6) getrennt sind, welche ein Bio-Medium aus Kunststoff umfasst.

5. Kompaktfilter gemäß Anspruch 2,
**dadurch gekennzeichnet, dass**
das dreidimensionale Komplex aus einem Polypropylen-Monofilament hergestellt wird.

6. Kompaktfilter gemäß einem der Ansprüche 2 oder 5,
**dadurch gekennzeichnet, dass**
der Film des dreidimensionalen Komplexes (7, 7') eine Dicke zwischen 0,5 und 1,0 cm aufweist.

7. Kompaktfilter gemäß einem der Ansprüche 1 bis 6,
**dadurch gekennzeichnet, dass**
ein zweidimensionales Geotextil (8) zwischen der unteren Schicht (4₃) und dem Entwässerungskanal (5) angeordnet ist, um die Verstopfung der Entwässerungsmittel durch die Schwebstoffe zu vermeiden.

8. Kompaktfilter gemäß dem Anspruch 4,
**dadurch gekennzeichnet, dass**
das Bio-Medium aus Kunststoff (3) durch Elemente gebildet ist, welche eine große spezifische Fläche aufweisen und insbesondere in Netzen, die auf der Fläche der unteren Schicht (43) gleichmäßig verteilt sind, lose verpackt sind.

9. Kompaktfilter gemäß einem der Ansprüche 4 oder 8.
dadurch gegenzeichnet, dass
ein Film des dreidimensionalen Komplexes (7, 7') zwischen der mittleren Schicht (42) und der Wiederbelüftungsschicht (6) angeordnet ist.

10. Kompaktfilter gemäß einem der Ansprüche 4 bis 9,
**dadurch gekennzeichnet, dass**
die Dicke der verschiedenen Schichten Folgendes ist:
- obere Schicht: 8 bis 12 cm,
- mittlere Schicht: 16 bis 24 cm,
- Wiederbelüftungsschicht : 16 bis 24 cm, und
- untere Schicht: 25 bis 35 cm.

## Claims

1. Compact filter which is intended for a non-collective sanitation system for waste water and which is constituted by a sealed chamber (1) which is intended to be buried and which comprises an inlet tubing (10) and an outlet tubing (11) for the effluent, this chamber (1) being provided at the inner portion thereof with a filtering mass (4) which is constituted by an aerobic biomass support of a material which has a significant developed surface-area, and means for uniform distribution of the effluent originating from the inlet tubing on the upper surface of the filtering mass (4) and a drainage channel (5) which is located below the filtering mass (4) and which includes drainage means which enable the discharge via the outlet tubing of the effluent (11) which is processed after percolation through the filtering mass (4) by means of gravitational force,
**characterised in that**
the filtering mass (4) includes at least one layer of crushed nut shells which have a dimension between 2 and 10 mm.

2. Compact filter according to claim 1,
**characterised in that**
the filtering mass (4) includes at least two layers of crushed nut shells which are separated by a sheet of a three-dimensional complex (7, 7') obtained by means of extrusion from a mono-filament embedded in this filtering mass (4), respectively.

3. Compact filter according to either claim 1 or claim 2,
**characterised in that**
the filtering mass (4) includes three layers of crushed nut shells, that is to say, an upper layer (4₁), an intermediate layer (4₂) and a lower layer (4₃) .

4. Compact filter according to claim 3,
**characterised in that**
the intermediate layer (4₂) and the lower layer (4₃) are separated by a re-aeration layer (6) which includes a bio-media of plastics material.

5. Compact filter according to claim 2,
**characterised in that**
the three-dimensional complex is obtained from a mono-filament of polypropylene.

6. Compact filter according to either claim 2 or claim 5,
**characterised in that**
the sheet of the three-dimensional complex (7, 7') has a thickness between 0.5 and 1.0 cm.

7. Compact filter according to any one of claims 1 to 6,
**characterised in that**
a bidimensional geotextile (8) is interposed between the lower layer (4₃) and the drainage channel (5) in order to prevent the drainage means from becoming clogged with the materials in suspension.

8. Compact filter according to claim 4,
**characterised in that**
the bio-media of plastics material (3) is constituted by elements which have a large specific surface-area which are in particular packed loosely in nets which are uniformly distributed over the surface of the lower layer (4₃).

9. Compact filter according to either claim 4 or claim 8,
**characterised in that**
a sheet of the three-dimensional complex (7, 7') is interposed between the intermediate layer (4₂) and the re-aeration layer (6).

10. Compact filter according to any one of claims 4 to 9,
**characterised in that**
the thickness of the different layers is as follows:
- upper layer: from 8 to 12 cm,
- intermediate layer: from 16 to 24 cm,
- re-aeration layer: from 12 to 15 cm, and
- lower layer: from 25 to 35 cm.
